# EUROPEAN PATENT APPLICATION

(11) **EP 4 852 315 A1**
(43) Date of publication of application: **09.12.2026**
(21) Application number: 25180483.7
(22) Date of filing: 03.06.2025
(51) Int. Cl.: H02S 50/15

(54) **METHOD AND DEVICE FOR ANALYZING A MULTI-JUNCTION SOLAR CELL**

(71) Applicant: Forschungszentrum Jülich GmbH, 52428 Jülich (DE)
(72) Inventor: ASLAN, Sercan, 52066 Aachen (DE); DING, Dr., Kaining, 52146 Würselen (DE)
(74) Representative: Gille Hrabal Partnerschaftsgesellschaft mbB Patentanwälte

(57) **Abstract**

The invention relates to a method and a device for analyzing a multi-junction solar cell as well as a computer program. A multi-junction solar cell (1) comprises at least two subcells. A method (4) for analyzing said multi-junction solar cell (1), comprises illuminating (10) the solar cell (1) with a first light spectrum (5), wherein a first subcell (2) is responsive to the first light spectrum (5), and determining (13) an open-circuit voltage (VOC) of the first subcell (2) based on a measured open-circuit voltage (VOC) of the multi-junction solar cell (1). This allows determining the open-circuit voltage of a subcell of a multi-junction solar cell in a rapid, easy and precise manner.

## Description

The invention relates to a method and a device for analyzing a multi-junction solar cell as well as a computer program.

Multi-junction solar cells are formed of multiple individual solar cells stacked upon one another. These individual solar cells, which are also referred to as subcells, are connected in series. Compared to traditional solar cells, multi-junction solar cells can reach higher efficiencies in converting solar radiation to electricity.

The open-circuit voltage V_{OC} of a solar cell is the difference of electrical potential between the two terminals of the solar cell when disconnected from any circuit. There is no external load connected. No external electric current flows between the terminals. The V_{OC} represents the maximum voltage the solar cell can produce, and this occurs at zero current.

The open-circuit voltage is an important parameter of a solar cell. For example, determining a maximum number of solar cells to be connected to an inverter is based on the open-circuit voltage.

The open-circuit voltage of a multi-junction solar cell is the sum of open circuit-voltages of the subcells. While the total open-circuit voltage of a multi-junction solar cell is easy to obtain by measuring the voltage across the positive and negative terminals of the solar cell using a voltmeter, this does not apply for the open-circuit voltages of a subcell, as the subcells behave differently when stacked in a multi-junction solar cell. However, determining the open-circuit voltage of a subcell is important to understand the behavior of a subcell, for example the voltage-dependent properties of a subcell. Conventionally, the electroluminescence (EL) method is used for this purpose.

In the EL method, an electroluminescence camera is used to measure the electroluminescence of the solar cell to be analyzed on the basis of EL emission and external quantum efficiency (EQE). The solar cell is operated as a light emitter and the emitted light is analyzed. A short-circuit current of the multi-junction solar cell is determined by a separate EQE setup. Then, the camera is calibrated to the EL spectrum of the solar cell. Based on the energy-dependent proportionality factor, the current-voltage characteristic for each subcell can be extracted. Calibration may be lengthy and cumbersome, because the correct signal range has to be met. Calibration has to be performed for each individual solar cell to be analyzed. In addition, an optical setup is required for exciting the solar cell, for example comprising lenses and/or lasers. A large space is required for this system. Complex and time-consuming data analysis is required. The technical effort of this method is too high for a regular analysis in industry, for example of each produced solar cell in a factory.

The above features and definitions may be combined with the aspects and embodiments of the invention below, unless otherwise specified.

The task of the invention is to determine the open-circuit voltage of a subcell of a multi-junction solar cell in a rapid, easy and precise manner.

The task is solved by the method according to claim 1 as well as the device and the computer program according to the additional claims. Advantageous embodiments are given in the subclaims.

A method for analyzing a multi-junction solar cell serves to solve the task. Said multi-junction solar cell comprises at least two subcells. The method comprises illuminating the multi-junction solar cell with a first light spectrum, wherein a first subcell is responsive to the first light spectrum. The method may further comprise determining an open-circuit voltage of the first subcell based on a measured open-circuit voltage of the multi-junction solar cell. Alternatively or additionally, the method may comprise measuring an open-circuit voltage of the multi-junction solar cell to determine the open-circuit voltage of the first subcell.

Illuminating the first subcell with the first light spectrum enables a separate reaction of the first subcell, so that an open-circuit voltage of the first subcell can be determined. At open circuit conditions, no current is extracted from the solar cell. It has shown that this enables the two subcells to be separated at this condition regarding their respective open-circuit voltage. Thus, the open-circuit voltage of the multi-junction solar cell measured under these conditions represents the open-circuit voltage of the first subcell. This method has a very low technical effort and is quick, so it can be used for a regular analysis of solar cells produced in the industry.

The first light spectrum comprises light of a defined wavelength band. This can be expressed via a lower wavelength limit and an upper wavelength limit, for example. Between the limits, different wavelengths or all wavelengths may be present.

Wavelengths between the limits may be represented equally or following a specific curve. For example, the first light spectrum and/or the second light spectrum is calibrated to, is based on and/or originates from a spectrum calibrated to a standardized spectral irradiance, such as the AM1.5G spectrum.

The first subcell is responsive to the first light spectrum. In other words, the first subcell is able to convert light of the first light spectrum to electricity. The first subcell does not have to be able to convert all wavelengths of the first light spectrum to electricity. Also, not all wavelengths which the first subcell is able to convert have to be part of the first light spectrum. However, there has to be a certain overlap between the absorption spectrum of the first subcell, which is explained in more detail below, and the first light spectrum.

In particular, the measurement of the open-circuit voltage of the multi-junction solar cell is performed while illuminating the solar cell with the first light spectrum. The illumination may start before the measurement. The illumination may continue after the end of the measurement, the measurement may continue after the end of the illumination or the measurement and the illumination may end at the same time.

The open-circuit voltage of the multi-junction solar cell is measured. This may be performed by connecting a voltmeter to the two connections of the multi-junction solar cell. While doing this, the circuit of the solar cell is open, i.e. no external loads are connected.

In one embodiment, the method further comprises illuminating the solar cell with a second light spectrum different from the first light spectrum, wherein a second subcell is responsive to the second light spectrum, and/or determining the open-circuit voltage of the second subcell by measuring the open-circuit voltage of the multi-junction solar cell. Alternatively or additionally, the method may comprise measuring an open-circuit voltage of the multi-junction solar cell to determine the open-circuit voltage of the second subcell.

In particular, illuminating the solar cell with the second light spectrum is performed after illuminating it with the first light spectrum at least in a time period. In other words, while the two illuminations may partially timely overlap, there must be a time period in which only the first illumination takes place but not the second illumination, and there must be a time period in which only the second illumination takes place but not the first illumination. The measurement of the open-circuit voltage for determining the open-circuit voltage of the respective first or second subcell has to be performed in this respective time period. The sequence of the illuminations can be chosen as desired. Preferably, illumination with the second light spectrum is performed after the illumination with the first light spectrum has ended.

The second light spectrum is different from the first light spectrum. All features, properties and details of the first light spectrum may also apply to the second light spectrum.

In one configuration, the solar cell has at least three subcells. The method may further comprise illuminating the solar cell with a third light spectrum different from the first light spectrum and the second light spectrum, wherein the third subcell is responsive to the third light spectrum, and/or determining the open-circuit voltage of the third subcell by measuring the open-circuit voltage of the multi-junction solar cell. All features and details of the first or second subcell and the related method steps, for example the used light spectra, and device configurations may also apply to the third subcell.

In one configuration, the solar cell has at least four subcells. All features and details of the first, second and third subcells and the related method steps and device configurations may also apply to the fourth subcell.

In one configuration, the first light spectrum covers at most 30%, in particular at most 20%, more particularly at most 10%, more preferably at most 5%, especially preferably 0% of an absorption spectrum of the second subcell. In one configuration, the second light spectrum covers at most 30%, in particular at most 20%, more particularly at most 10%, more preferably at most 5%, especially preferably 0% of an absorption spectrum of the first subcell.

Each solar cell utilizes a certain spectrum of the solar radiation, which is referred to herein as its absorption spectrum, and converts it into electricity. For example, the first subcell has an absorption spectrum of 300 nm to 400 nm, i.e., the first subcell is able to convert light having wavelengths between 300 nm and 400 nm to electricity. The first subcell can be excited only by light of this wavelength range. Light with wavelengths below 300 nm is not converted into electricity. Light with wavelengths above 400 nm is not converted into electricity. The efficiency of light conversion may depend on the wavelength within the absorption spectrum.

For example, if the first subcell has an absorption spectrum of 300 nm to 400 nm and the second light spectrum is 380 nm to 600 nm, there is an overlap in the range of 380 nm to 400 nm between the first absorption spectrum and the second light spectrum, which corresponds to 20% of the absorption spectrum of the first subcell.

In this embodiment, the first light spectrum covers only a little fraction of the absorption spectrum of the second subcell, and/or vice versa. In other words, the second subcell is excited only to a low extent and preferably not at all by the first light spectrum, and/or vice versa. In particular, the second subcell is substantially not or not at all responsive to the first light spectrum, and/or the first subcell is substantially not or not at all responsive to the second light spectrum. In particular, each light spectrum is selected such that only one subcell is excited. If there are more than two subcells, the same applies.

This minimizes the undesired influence of the respective subcell currently not being analyzed on the open-circuit voltage. Thus, the open-circuit voltage of the respective other subcell can be determined in a particularly precise manner.

In one configuration, the absorption spectrum of the second subcell covers at most 30%, in particular at most 20%, more particularly at most 10%, more preferably at most 5%, especially preferably 0% of the first light spectrum. In one configuration, the absorption spectrum of the first subcell covers at most 30%, in particular at most 20%, more particularly at most 10%, more preferably at most 5%, especially preferably 0% of the second light spectrum.

In one embodiment, the first light spectrum covers at least 25% or at least 30%, in one example at least 35% or at least 40%, in another example at least 45% or at least 50%, in particular at least 60%, more particularly at least 70%, preferably at least 80% or at least 90%, more preferably at least 95% or 100% of an absorption spectrum of the first subcell. In one embodiment, the second light spectrum covers at least 25% or at least 30%, in one example at least 35% or at least 40%, in another example at least 45% or at least 50%, in particular at least 60%, more particularly at least 70%, preferably at least 80% or at least 90%, more preferably at least 95% or 100% of an absorption spectrum of the second subcell.

In one configuration, the first light spectrum covers at most 90%, in particular at most 75%, more particularly at most 60%, in one example at most 50% or at most 45%, in another example at most 40% or 35% and in yet another example at most 30% or at most 25% of the absorption spectrum of the first subcell. In one configuration, the second light spectrum covers at most 90%, in particular at most 75%, more particularly at most 60%, in one example at most 50% or at most 45%, in another example at most 40% or 35% and in yet another example at most 30% or at most 25% of the absorption spectrum of the second subcell. It has been shown that a part of the spectrum is sufficient to obtain a high-precision open-circuit voltage.

If, for example, the absorption spectra of the subcells are close to each other, this may be a way to find suitable light spectra. For example, the upper boundary of the lower-wavelength light spectrum can be chosen to be so low and/or the lower boundary of the upper-wavelength light spectrum can be chosen to be so high that there is no excitation of the respective other subcell.

In this embodiment, the first light spectrum covers a great part of the absorption spectrum of the first subcell. For example, as above, the first subcell has an absorption spectrum of 300 nm to 400 nm. For example, the first light spectrum could range from 305 nm to 410 nm, thus covering 305 nm to 400 nm of the first absorption spectrum or 95% of the first absorption spectrum.

Covering a great part of the light spectrum of the respective subcell leads to particularly precise results, as the different fractions of the light spectrum may have a different influence on the open-circuit voltage. It has been found that the results are sufficiently precise for 70%. A higher coverage is not always possible depending on the absorption spectra of the different subcells which may overlap in some cases. However, in principle, a higher coverage is still preferable.

In one configuration, the first light spectrum entirely covers the absorption spectrum of the first subcell. In one configuration, the second light spectrum entirely covers the absorption spectrum of the second subcell. In one configuration, the absorption spectrum of the first subcell entirely covers the first light spectrum. In one configuration, the absorption spectrum of the second subcell entirely covers the second light spectrum.

In one configuration, the absorption spectrum of the first subcell covers at least 50%, in particular at least 60%, more particularly at least 70%, preferably at least 80% or at least 90%, more preferably at least 95% or 100% of the first light spectrum. In one configuration, the absorption spectrum of the second subcell covers at least 50%, in particular at least 60%, more particularly at least 70%, preferably at least 80% or at least 90%, more preferably at least 95% or 100% of the second light spectrum.

In one embodiment, the method comprises determining an absorption spectrum of the fist subcell. In one embodiment, the method comprises determining an absorption spectrum of the second subcell. Determining an absorption spectrum can be performed by measuring external quantum efficiency. A wavelength of incident light emitted by a light source can be varied and the resulting voltage and/or current can be measured. Monochromatic light may be used. Light may be used of which the number of photons is known. The determined absorption spectrum typically comprises or consists of a lower wavelength boundary and an upper wavelength boundary of the respective absorption spectrum.

Knowing the absorption spectrum of a subcell, preferably of each subcell, allows to select the boundaries of the first light spectrum and/or the second light spectrum. The method may comprise selecting a lower boundary and/or an upper boundary of the first light spectrum based on the absorption spectrum of the first subcell and, in particular, the absorption spectrum of the second subcell. The method may comprise selecting a lower boundary and/or an upper boundary of the second light spectrum based on the absorption spectrum of the second subcell and, in particular, the absorption spectrum of the first subcell. Taking into account the absorption spectrum of the respective other subcell allows to insert a gap between the first and second light spectra in order to minimize undesired influences.

In one embodiment, the wavelengths of the first light spectrum and the second light spectrum overlap for at most 5%, in particular 0%. Preferably, the wavelengths of the two light spectra do not overlap.

In one configuration, there is a gap between the first light spectrum and the second light spectrum. For example, there may be a gap between the highest wavelength of the lower-wavelength light spectrum and the lowest wavelength of the higher-wavelength light spectrum. The gap may be at least 5%, preferably at least 10%, more preferably at least 20%, in one example at least 40%, in a further example at least 60% or at least 80% of the bandwidth of the first light spectrum and/or the second light spectrum. In some embodiments, the gap may be at least 100%, preferably at least 150%, more preferably at least 200%, particularly at least 250% or at least 300%, more particularly at least 350% or at least 400% of the bandwidth of the first light spectrum and/or the second light spectrum.

The first light spectrum may have larger wavelengths than the second light spectrum or vice versa.

In one embodiment, the illumination with the first light spectrum is performed over a time period of at least 30 s, in particular at least 40 s, more particularly at least 50 s, preferably at least 60 s or at least 70 s, more preferably at least 80 s or at least 90 s, and in one example at least 100 s. Illumination can be performed over even longer time periods such as at least 110 s, at least 120 s or at least 130 s. in other examples, illumination can be performed over at least 150 s, at least 175 s, at least 200 s, at least 225 s, at least 250 s, at lease 275 s or at least 300 s.

Some solar cells, for example those having organic materials and/or perovskites, require a certain time for stabilization until the electricity production reaches an equilibrium. This embodiments takes into account this time required. Thus, the open-circuit voltage can be determined particularly precisely.

In one embodiment, the illumination with the second light spectrum is performed over a time period of at least 30 s, in particular at least 40 s, more particularly at least 50 s, preferably at least 60 s or at least 70 s, more preferably at least 80 s or at least 90 s, and in one example at least 100 s. Illumination can be performed over even longer time periods such as at least 110 s, at least 120 s or at least 130 s.

In one embodiment, the multi-junction solar cell is a tandem solar cell. In one embodiment, the multi-junction solar cell is a perovskite-silicon solar cell. The solar cell may be a perovskite-silicon tandem solar cell.

In one embodiment, the first light spectrum comprises a range of 300 nm to 400 nm. The lower wavelength boundary may be 300 nm. The upper wavelength boundary may be 400 nm. In one embodiment, the second light spectrum comprises a range of 900 nm to 1200 nm. The lower wavelength boundary may be 900 nm. The upper wavelength boundary may be 1200 nm.

In one embodiment, the method further comprises performing voltage-dependent performance analysis of the first subcell and/or for the second subcell. The method may therefore also configured to perform characterizations of the subcells apart from the open-circuit voltage, such as the voltage-dependent performance analysis.

In one embodiment, the method further comprises determining the short-circuit current of the multi-junction solar cell.

The short-circuit current (or short-circuit current density) I_{SC} is the current a solar cell produces when no load is connected to it. It can be measured by connecting the positive and negative terminals of the solar cell to each other through an ammeter in series. I_{SC} represents the highest current the solar panel can produce. The I_{SC} value is used to determine the maximum current that the solar panel can handle when connected to devices such as inverters or charge controllers. The I_{SC} of a multi-junction solar cell is the smallest current allowed by one of the subcells, i.e., the subcell with the smallest current defines the I_{SC} of the total multi-junction solar cell.

A further aspect of the invention is a device for analyzing a multi-junction solar cell. In particular, said multi-junction solar cell comprises at least two subcells. The device comprises at least one light source for illuminating the solar cell with a first light spectrum and/or for illuminating the solar cell with a second light spectrum different from the first light spectrum. The device may further comprise a measuring device for measuring an open-circuit voltage of the multi-junction solar cell. The device may further comprise a control device configured to control the at least one light source and the measuring device to perform an analysis process comprising illumination of the solar cell with the first light spectrum, measuring the open-circuit voltage to obtain an open-circuit voltage of the first subcell, illumination of the solar cell with the second light spectrum, and measuring the open-circuit voltage to obtain an open-circuit voltage of the second subcell. The illumination of the second subcell and the corresponding measurement may be performed after the illumination of the first subcell and the corresponding measurement. All features, properties and advantages of the method described at the beginning may also apply for the device and vice versa.

In particular, the device is configured to track the voltage and/or current at open-circuit conditions. In particular, the device is configured to track the voltage and/or current at short-circuit conditions.

In one embodiment, at least one light source is an LED light source.

In one embodiment, one light source is used for illumination with the first light spectrum and the second light spectrum. In particular, the light source is configured to be switched between the first light spectrum and the second light spectrum. The control device may be configured to switch the light source between the first light spectrum and the second light spectrum. The method may comprise switching between the light spectra. The light source may also be configured to be excite a solar cell for determining an absorption spectrum of a first and/or second subcell.

In one embodiment, the control device comprises a computer having a processor and a data storage. In particular, the computer has access to instructions for performing at least one step of the method according to the invention.

Another aspect of the invention is a computer program comprising instructions, which, when the program is executed on a control device of a device for analyzing a multi-junction solar cell, in particular according to the invention, causes the device to perform a method for analyzing a multi-junction solar cell, in particular according to the invention.

In the following, exemplary embodiments of the invention are shown using figures. The features of the figures can be combined individually or in combination with other features. The figures are not limiting.

The figures show:
- Figure 1:: a schematic representation of the device during analysis,
- Figure 2:: steps of an analysis method;
- Figure 3:: a schematic representation of light spectra, and
- Figure 4:: measurement results of the analysis method.

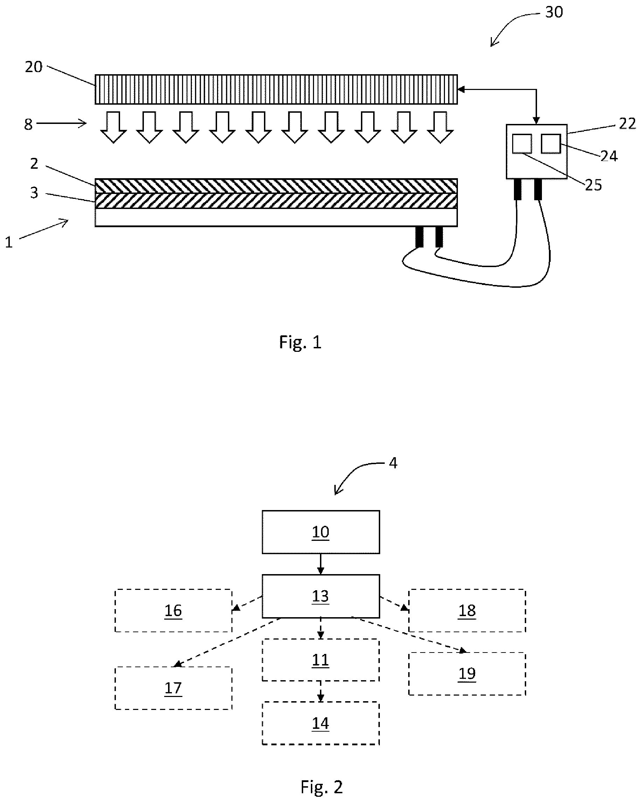

Figure 1 shows a schematic overview of the device 30 for analyzing a multi-junction solar cell 1 according to the invention while analyzing a multi-junction solar cell 1. By way of example, the solar cell 1 is a tandem cell having a first subcell 2 and a second subcell 3.

The device 30 comprises a light source 20 configured to illuminate the solar cell with light 8, in particular an LED light source 30. The device 30 further comprises a measuring device 24 which can be electrically connected to the solar cell 1 and a control device 25 for controlling the light source 20 and the measuring device 24 to perform an analysis process. The measuring device 24 and the control device 25 may be arranged in a common housing 22.

The device 30 may comprise connectors to be electrically connected to the terminals of the solar cell 1, for example using cables, as indicated in Figure 1. There is a data connection between the control device 25 and the light source 20 to perform illumination with the first and second light spectra and, in particular, to switch between the first and second light spectra.

Figure 2 shows steps of the method for analyzing a multi-junction solar cell 1. It comprises illuminating 10 the solar cell with a first light spectrum and determining 13 an open-circuit voltage of the first subcell based on a measured open-circuit voltage of the multi-junction solar cell. Further steps are shown in dashed lines. Each further step may be performed independently of any other further step.

The method 4 may further comprise illuminating 11 the solar cell with a second light spectrum and determining 14 an open-circuit voltage of the second subcell based on a measured open-circuit voltage of the multi-junction solar cell. It may further comprise determining 16 an absorption spectrum of the first subcell and/or determining 17 an absorption spectrum of the second subcell. It may further comprise performing 18 voltage-dependent performance analysis of the first subcell and/or of the second subcell, and/or determining 19 the short-circuit current of the multi-junction solar cell.

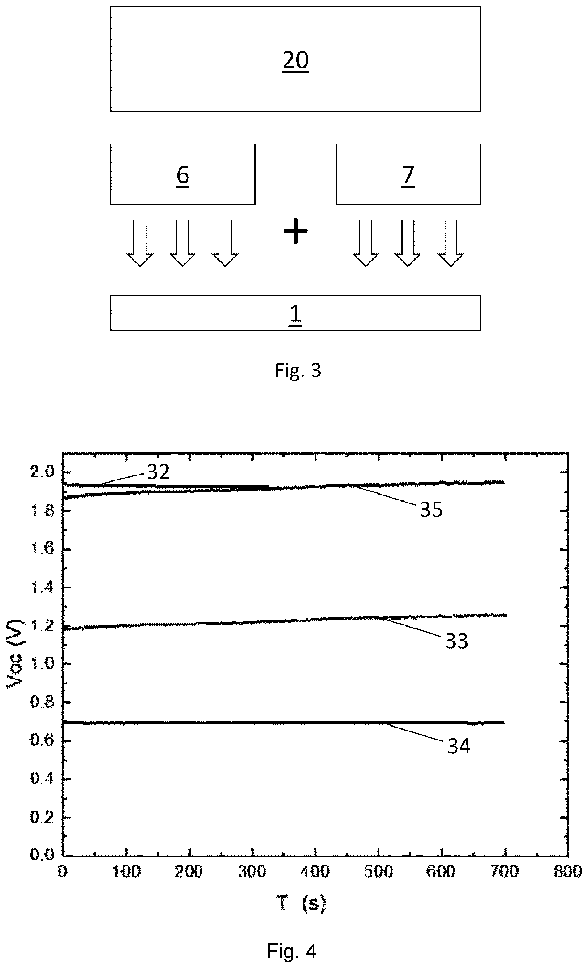

Figure 3 schematically shows the first light spectrum 6, for example a blue spectrum, and the second light spectrum 7, for example a red spectrum, emitted by the light source 20 one after the other. The multi-junction solar cell 1 is irradiated subsequently using the two light spectra 6, 7. During irradiation and/or measurement, the solar cell 1 is in particular in open-circuit condition.

Figure 4 shows graphs of open-circuit voltages V_{OC} in volts V over time T in seconds s. Plotted is the V_{OC} of a tandem cell 32, the V_{OC} of its top cell 33 which can be referred to as a first subcell, the V_{OC} of its bottom cell 34 which can be referred to as a second subcell and the sum 35 of the V_{OC}s of the top and bottom cells as a control. It becomes clear that the sum 35 substantially corresponds to the V_{OC} of the top cell 33 and the V_{OC} of the bottom cell 34. This shows that the method is able to determine the V_{OC} of each subcell precisely.

Slight discrepancies may arise from limited first and second illumination spectra of which the sum does not necessarily correspond to the total illumination spectrum of the multi-junction solar cell, and/or from adaptation times required for perovskite solar cells to establish an equilibrium, as described above. It is visible that the difference reduces over time.

### List of Reference Signs

| | |
|---|---|
| Solar cell | 1 |
| First subcell | 2 |
| Second subcell | 3 |
| Method | 4 |
| First light spectrum | 5 |
| Second light spectrum | 6 |
| Light | 8 |
| Illuminating | 10 |
| Illuminating | 11 |
| Determining | 13 |
| Determining | 14 |
| Determining | 16 |
| Determining | 17 |
| Determining | 18 |
| Determining | 19 |
| Light source | 20 |
| Housing | 22 |
| Measuring device | 24 |
| Control device | 25 |
| Device | 30 |
| V_{OC} tandem cell | 32 |
| V_{OC} top cell | 33 |
| V_{OC} bottom cell | 34 |
| Sum | 35 |
| Open-circuit voltage | V_{OC} |
| Volts | V |
| Time | T |
| Seconds | s |

## Claims

1. A method (4) for analyzing a multi-junction solar cell (1), said multi-junction solar cell (1) comprising at least two subcells, the method (4) comprising:
- Illuminating (10) the solar cell (1) with a first light spectrum (5), wherein a first subcell (2) is responsive to the first light spectrum (5),
- determining (13) an open-circuit voltage (V_{OC}) of the first subcell (2) based on a measured open-circuit voltage (V_{OC}) of the multi-junction solar cell (1).

2. The method (4) of claim 1, further comprising:
- illuminating (11) the solar cell (1) with a second light spectrum (6) different from the first light spectrum (5), wherein a second subcell (3) is responsive to the second light spectrum (6),
- determining (14) the open-circuit voltage (V_{OC}) of the second subcell (3) by measuring the open-circuit voltage (V_{OC}) of the multi-junction solar cell (1).

3. The method (4) of one of the preceding claims, wherein the first light spectrum (5) covers at most 10%, preferably 0% of an absorption spectrum of the second subcell (3), and/or wherein the second light spectrum (6) covers at most 10%, preferably 0% of an absorption spectrum of the first subcell (2).

4. The method (4) of one of the preceding claims, wherein the first light spectrum (5) covers at least 50% of an absorption spectrum of the first subcell (2), and/or wherein the second light spectrum (6) covers at least 50% of an absorption spectrum of the second subcell (3).

5. The method (4) of one of the preceding claims, further comprising determining (16) an absorption spectrum of the first subcell (2) and, in particular, determining (17) an absorption spectrum of the second subcell (3).

6. The method (4) of one of the four preceding claims, wherein wavelengths of the first light spectrum (5) and the second light spectrum (6) do not overlap.

7. The method (4) of one of the preceding claims, wherein the illumination (10) with the first light spectrum (5) is performed over a time period of at least 60 s, preferably at least 90 s,
wherein, in particular, the illumination (11) with the second light spectrum (6) is performed over a time period of at least 60 s, preferably at least 90 s.

8. The method (4) of one of the preceding claims, wherein the multi-junction solar cell (1) is a perovskite-silicon solar cell (1) and/or a tandem solar cell (1).

9. The method (4) of one of the preceding claims, wherein the first light spectrum (5) comprises a range of 300 nm to 400 nm and/or the second light spectrum (6) comprises a range of 900 nm to 1200 nm.

10. The method (4) of one of the preceding claims, further comprising performing (18) voltage-dependent performance analysis of the first subcell (2) and, in particular, of the second subcell (3), and/or determining (19) the short-circuit current of the multi-junction solar cell (1).

11. A device (30) for analyzing a multi-junction solar cell (1), said multi-junction solar cell (1) comprising at least two subcells, the device (30) comprising:
- at least one light source (20) for illuminating the solar cell (1) with a first light spectrum (5) and for illuminating the solar cell (1) with a second light spectrum (6) different from the first light spectrum (5),
- a measuring device (24) for measuring an open-circuit voltage (V_{OC}) of the multi-junction solar cell (1), and
- a control device (25) configured to control the at least one light source (20) and the measuring device (24) to perform an analysis process comprising illumination (10) of the solar cell (1) with the first light spectrum (5), measuring the open-circuit voltage (V_{OC}) to obtain an open-circuit voltage (V_{OC}) of the first subcell (2), illumination (11) of the solar cell (1) with the second light spectrum (6), and measuring the open-circuit voltage (V_{OC}) to obtain an open-circuit voltage (V_{OC}) of the second subcell (3).

12. The device (30) of the preceding claim, wherein at least one light source (20) is an LED light source (20).

13. The device (30) of the preceding claim, wherein one light source (20) is used for illumination (10) with the first light spectrum (5) and illumination (11) with the second light spectrum (6), wherein the light source (20) is in particular configured to be switched between the first light spectrum (5) and the second light spectrum (6).

14. The device (30) for analyzing a multi-junction solar cell (1), wherein the control device (25) comprises a computer having a processor and a data storage.

15. A computer program comprising instructions, which, when the program is executed on a control device (25) of a device (30) for analyzing a multi-junction solar cell (1), causes the device (30) to perform the method (4) of one of the claims 1 to 10.
